(19) Europäisches Patentamt
European Patent Office
Office européen des brevets

(11) Publication number: **0 086 842**
**A1**

(12)

# EUROPEAN PATENT APPLICATION

published in accordance with Art. 158(3) EPC

(21) Application number: 82902469.4

(51) Int. Cl.[3]: **C 08 J 5/12**

(22) Date of filing: 23.08.82

Data of the international application taken as a basis:

(86) International application number:
PCT/JP82/00330

(87) International publication number:
WO83/00871 (17.03.83 83/07)

(30) Priority: 28.08.81 JP 135911/81
28.08.81 JP 135912/81
28.08.81 JP 135913/81
28.08.81 JP 135926/81

(43) Date of publication of application:
31.08.83 Bulletin 83/35

(84) Designated Contracting States:
BE DE FR GB NL SE

(71) Applicant: **DAINICHI-NIPPON CABLES, LTD.**
**8, Nishino-cho Higashimukaijima Amagasaki-shi**
**Hyogo-ken 660(JP)**

(72) Inventor: **MASTUI, Masatake Dainichi-Nippon Cables Ltd.**
**8, Nishinocho Higashimukaijima Amagasaki-shi**
**Hyogo 660(JP)**

(72) Inventor: **MOMOSE, Chiaki Dainichi-Nippon Cables Ltd.**
**8, Nishinocho Higashimukaijima Amagasaki-shi**
**Hyogo 660(JP)**

(74) Representative: **von Kreisler, Alek, Dipl.-Chem. et al,**
**Deichmannhaus am Hauptbahnhof**
**D-5000 Köln 1(DE)**

(54) **METHOD FOR BONDING POLYOLEFIN ARTICLES.**

(57) A method for bonding polyolefin articles one or both of which is made of crosslinked polyolefin at least in the surface layer, which method comprises disposing a cross-linkable polyolefin composition containing an organic peroxide between the surfaces of the articles to be bonded and heating the composition to cause crosslinking. This method makes it possible to bond crosslinked polyolefin articles which have been considered to be unweldable hitherto. This method can be applied for, for example, connecting crosslinked polyethylene pipes.

EP 0 086 842 A1

0086842

TITLE MODIFIED
see front page

SPECIFICATION

# Method of Adhering Articles of Polyolefin

## TECHNICAL FIELD

The present invention relates to a method of adhering two articles one or both of which at least have a surface layer of cured polyolefin, for example, of adhering cured polyolefin pipes.

## BACKGROUND ART

Although articles of uncured polyolefin can be bonded together by heat adhesion, it is impossible to satisfactorily heat-adhere two articles at least one of which is made of cured polyolefin because cured polyolefin does not melt substantially.

Pipes of cured polyolefin are superior to pipes of uncured polyolefin in heat resistance and mechanical strength, especially in resistance to environmental stress cracking, and therefore appear useful as gas pipes, tap water pipes and hot water pipes, whereas pipes of cured polyolefin have the drawback that they are not connectable by heat adhesion for the above reason.

In recent years, water-curable polyolefin pipes have been proposed which are uncured before connection, are accordingly connectable by heat adhesion and are cured with the water in the atmosphere after connection. However, these pipes have the problem that in many cases they are cured at the surface layer during storage due to the presence of water in the atmosphere and consequently become less amenable to heat adhesion.

DISCLOSURE OF THE INVENTION

The present invention provides a method of effectively adhering two articles, such as pipes, rods and sheets, of cured polyolefin, or of adhering an uncured polyolefin article to a cured polyolefin article. More specifically the invention provides a method of adhering two polyolefin articles one or both which at least have a surface layer of cured polyolefin, the method being characterized in that a curable polyolefin composition containing an organic peroxide is interposed between the surfaces of the articles to be adhered and is heat-cured.

In the following description, the term "cured polyolefin articles" not only refers to articles which are made entirely of cured polyolefin but also includes articles made of cured polyolefin at least at the surface thereof to be bonded or adhered or in the neighborhood of the surface.

The method of the invention will be described with reference to a case wherein two cured polyolefin pipes are to be bonded together end-to-end. The two pipes are cut to provide end faces which are fittable to each other for bonding, with the clearance therebetween minimized, although a small clearance is allowable. The cut faces need not always be perpendicular to the axes of the pipes but may be slanted with respect to the axes. The pipe end faces may have projections or indentations if intimately fittable to each other.

The pipe ends thus prepared are then adhered with use of

the curable polyolefin composition. When the composition is liquid at room temperature or melted by heating for use, the composition is applied to the portion to be adhered of one or each of the pipes. The pipes are then contacted with each other with the composition interposed therebetween, and the composition is fully cured by heating, whereby interface between the surface of the pipes and the copmosition are also strongly cured to bond the pipes.

When the composition to be used is semi-solid or solid at room temperature, a piece of the composition is held between the opposed ends of the pipes to be bonded and is heated to a liquid state while being subjected to a pressure on both sides. The same procedure as when the liquid composition is used is thereafter followed to adhere the pipes.

Due to the reduction in the viscosity of the composition caused by the heating for curing and also due to the pressure applied to the composition by the pipes, the thickness of the composition gradually reduces with the progress of heat curing. On completion of curing, the composition has a reduced thickness of up to 1 mm or, possibly, of as small as up to 0.1 mm. The reduction of the thickness of the composition nevertheless presents no problem to the bond strength of the resulting pipe assembly.

To bond the pipes together with strength as uniform as possible over the entire circumference of the pipe ends, it is desired to render the thickness of the composition approximately uniform over the entire circumference at least when the composition starts to fully cure, for example, when the composition and the pipe ends have reached the curing temperature to be stated later. When the composition is in the form of a piece, a sheet or plate of the composition may be used which is suitably about 0.5 to about 20 mm in thickness.

When the composition is heat-cured, the organic peroxide contained in the composition partly migrates into the adjoining pipe portions, whereby polyolefin molecules forming the pipes snd those forming the composition are bonded together to bond the pipes.

When the composition is heated for curing, it is held pressed under a surface pressure of 1 to 200 kg/cm$^2$, preferably about 5 to about 150 kg/cm$^2$.

While the composition can be heated by any desired method for bonding, it is critical that not only the layer of composition but also the pipe ends or the neighborhood thereof, particularly the pipe ends, be thoroughly heated to the decomposition temperature of the organic peroxide incorporated in the composition layer, preferably to a temperature at least 10°C higher than the temperature of 10-hour half period for the organic peroxide. The higher the heating temperature for the bonding step, the more rapidly can the composition be cured with the organic peroxide, so that the pipe connecting work can be completed within a shorter period of time. Because the curable polyolefin composition is exposed to a high temperature for bonding, the polyolefin contained therein will be more or less oxidized with the oxygen having dissolved in the composition or with the oxygen in the atmosphere if no antioxidant is present, consequently affording reduced bond strength on completion of the curing reaction. Accordingly the antioxidant

incorporated into the composition inhibits the oxidation to give improved bond strength, hence desirable.

Articles other than pipes can be bonded together under the same conditions of temperature and pressure as in the above procedure.

The adhering method of the present invention is useful also for bonding a polyolefin joint to a polyolefin pipe. In this case, the method is practiced in the following manner. When the polyolefin composition to be used is semi-solid or liquid at room temperature, the composition is applied to the inner surface of the joint and/or the outer surface of the pipe, the pipe is then inserted into the joint, and the composition is heat-cured. If the composition is solid at room temperature, it is melted by heating and then used in the same manner as above. Alternatively the solid composition may be shaped in the form of a thread, tape or film and wound around the pipe surface for application.

The articles to be bonded by the method of this invention are made of cured polyolefins including, for example, homopolymers and copolymers of α-olefins, such as ethylene, propylene, butene-1 and 4-methylpentene-1, homopolymers and copolymers of α-olefins containing halogens, carboxylic acids or derivatives thereof, and cured copolymers of α-olefins and carboxylic acids or derivatives thereof, such as cured polyethylene, cured polypropylene, cured polybutene-1, cured poly-4-methylpentene-1, cured ethylene-propylene copolymer, cured ethylene-vinyl acetate copolymer, cured ethylene-ethyl acrylate copolymer and cured

chlorinated polyethylene. The degree of curing of the polyolefins forming the articles may be as high as 90 to 100% by weight in terms of gel fraction (The percentages and parts used in the following description of the invention are all by weight unless otherwise specified.). The curing degree may be medium to low in the range of less than 90%, for example, 10 to 90%. Such articles of cured polyolefins can be prepared, for example, from a polyolefin composition containing one of the organic peroxides to be given later by extrusion and heat-curing, from a water-curable polyolefin composition by extrusion and subsequent curing with water, or from a polyolefin composition containing a substance sensitive to radiation or ultraviolet rays by extrusion and subsequent irradiation with radiation or ultraviolet rays. In this invention, articles prepared by any known curing processes are usable. Above all, preferable are shaped articles, especially pipes, of cured polyethylene prepared by heat curing with use of an organic peroxide or curing with water and having a gel fraction of at least 10%, more advantageously at least 20%.

The curable polyolefin composition useful for the invention comprises as the base thereof at least one polyolefin of the same concept as the polyolefins exemplified as the component of the cured polyolefin articles. The polyolefin to be used as the base of the composition may be of the same kind as or different from the polyolefin to be cured for providing the polyolefin adherend. Examples of preferred polyolefins are

as follows.

(1) Copolymers of ethylene and at least one of α-olefins having 3 to 10 carbon atoms (containing 0.5 to 50% of the α-olefin)

Examples of α-olefins having 3 to 10 carbon atoms and useful as one of the components of such copolymers are propylene, butene-1, pentene-1, 4-methylpentene-1 and hexene-1.

The ratio of the α-olefin in the copolymer is 0.5 to 50% as stated above, preferably 5 to 30%. If the ratio is less than 0.5%, reduced bond strength tends to result, whereas if the ratio exceeds 50%, the composition requires a higher temperature in forming thereof. This imposes a limitation on the kinds of organic peroxides usable. Especially preferable among such copolymers are those having a density of less than 0.915 g/$cm^3$ as measured according to JIS K 6760 since they are amenable to proceesing and shaping.

The copolymer may further contain in the molecule thereof at least one of nonconjugated dienes, ethylenically unsaturated carboxylic acids and acid anhydrides thereof as its third component. The presence of the third component in a small amount is effective in affording improved adhesion by curing between the adherend and the layer of the curable polyolefin composition used in this invention. However, the third component, if present in an excessive amount, conversely results in reduced bond strength, so that the content of the third component should preferably be not more than 10%.

Useful nonconjugated dienes are those used as the third

component of EPDM and including, for example, methylenenorbornene, ethylidenenorbornene and like norbornenes, 1,11-tridecadiene, 11-ethyl-1,11-tridecadiene, 6-methyl-1,6-heptadiene, methyltetrahydroindene and like nonconjugated dienes.

Examples of useful ethylenically unsaturated carboxylic acids are those amenable to radical polymerization and represented by the formula

$$\begin{array}{l} R^1 \quad R^3 \\ | \qquad | \\ C = C - COOH \\ | \\ R^2 \end{array} \qquad (I)$$

Wherein $R^1$, $R^2$ and $R^3$ are the same or different and are each a hydrogen atom, halogen atom, carboxyl, alkyl having 1 to 10 carbon atoms or carboxyalkyl having 1 to 10 carbon atoms, or acid anhydrides thereof. More specific examples are acrylic acid, maleic acid, itaconic acid, himic acid and acid anhydrides thereof.

(2) Polyolefins modified with an ethylenically unsaturated carboxylic acid or an acid anhydride thereof (containing 0.001 to 10% of the acid; hereinafter referred to as "modified polyolefins")

The modified polyolefins are polymers of α-olefins containing about 0.001 to about 10% of a compound represented by the formula (I) or an acid anhydride thereof as a copolymer component or graft component.

Examples of useful α-olefins are ethylene, propylene, butene-1 and 4-methylpentene-1. These compounds are used

singly or in admixture.

The ethylenically unsatureated carboxylic acid is incorporated in the polyolefin by copolymerization or graft polymerization in an amount of 0.001 to 10% as already stated, preferably 0.01 to 1%, based on the modified polyolefin. With less than 0.001% of the acid present, reduced bond strength will result, whereas if the acid content exceeds 10%, bubbles tend to occur in the polyolefin composition and at the interface between the adherend and the composition, entailing impaired bond strength.

Examples of preferred modified polyolefins are ethylene-acrylic acid copolymer (acrylic acid content: 0.01 to 1%), ethylene-maleic acid copolymer (maleic acid content: 0.01 to 1%), etc.

(3) Copolymers of an α-olefin and a carboxylic acid or a derivative thereof, with a melt index (g/10 min) of MI = n x MIo as measured by the method of JIS K 6760. MIo is the melt index of the polyolefin forming the cured polyolefin article, such as pipe as measured by the same method before curing, and n is 0.2 to 5. Examples of such copolymers are the copolymers of i) α-olefins, such as ethylene, propylene, butene-1 and 4-methylpentene-1, and ii) carboxylic acids or derivatives thereof, such as vinyl acetate and ethyl acrylate. Of these examples, the ethylene-vinyl acetate copolymer preferably contains 5 to 30%, most preferably 10 to 20%, of vinyl acetate. In the case of ethylene-ethyl acrylate copolymer, the ethyl acrylate content is preferably 5 to 30%, most preferably 10 to 20%. The melt index is so

determined as to be in the foregoing relation.

(4) Polyethylenes having a melting peak (mp, °C) as determined by differential thermal analysis and a density (d, $g/cm^3$) which fulfill the conditions of:

$$mp \geq 500d - 345 \quad (1)$$

$$0.915 \leq d \leq 0.970 \quad (2)$$

The melting peak mp is a value determined by the method shown in Kanbara and Fujiwara, "Handbook of High Polymer Analysis", Sec. 3.15.1, pp 178-183, 1965, Asakura Shoten, Japan or B. Ke (ed.), "Newer Methods of Polymer Characterization", chap. IX, Pages 350-354 (1964), John Wiley & Sons, Inc., N. Y. The density is a value measured according to JIS K 6760 (20°C). Examples of useful polyethylenes are those known as linear low-density polyethylenes and linear medium-density polyethylenes. Preferably such polyethylenes are up to 160°C in melting peak.

While the polyolefins useful as the bases of curable polyolefin compositions have been described above with respect to their chemical structure, the polyolefins including above four kinds of polyolefins may have a high molecular weight and are solid at room temperature and extrudable. Alternatively the polyolefins may have such a low molecular weight that they are liquid or in the form of a pasty semi-solid at room temperature, or that they are solid at room temperature but have a high MI of at least 100 and can therefore be softened or liquefied when heated slightly. Accordingly the polyolefins to be used for the present composition are solid, semi-solid or liquid at room temperature depending on their properties.

A polydiene which is liquid at room temperature or which is solid and has a MI of at least 100 is usable conjointly with the polyolefin base to provide the present polyolefin composition in order to permit the organic peroxide to exhibit an enhanced curing effect and to render the resulting composition applicable with greater ease. The polydiene is used in an amount of 1 to 100 parts per 100 parts of the polyolefin. Use of more than 100 parts of the polydiene leads to reduced bond strength and is therefore undesirable.

Examples of useful polydienes are polybutadiene, polyisoprene and polychloroprene which are 800 to 50,000 in average molecular weight.

With the present invention, at least two of the foregoing polyolefins are usable in combination as the bases of curable polyolefin compositions.

Examples useful organic peroxides constituting the curable polyolefin compositions are those heretofore known as curing agents for polyethylenes and include dialkyl peroxides, such as dicumyl peroxide, 2,5-dimethyl-2,5-di-(t-butylperoxy)-hexyne-3, 1,3-bis-(t-butylperoxyisopropyl)benzene, 1,1-di-t-butylperoxy-3, 3,5-trimethylcyclohexane, t-butyl-cumyl peroxide, di-t-butyl peroxide and 4,4'-di-t-butylperoxyvaleric acid n-butyl ester, hydroperoxides, such as 2,5-dimethylhexyne-2,5-di-hydro peroxide, and peroxy acids, such as t-butylperoxybenzoate, di-t-butyl-di-peroxyphthalate and 2,5-di-(benzoylperoxy)hexane, or esters of such acids. Of these, dialkyl peroxides are especially preferable since they generally effect curing within a shorter

period of time, making it possible to bond cured polyolefin articles, particularly pipes, rapidly at site. If a small amount of such an organic peroxide is used, the bond strength obtained is low, whereas if an excess of the peroxide is used, the by-product of decomposition thereof tends to produce bubbles and result in reduced bond strength. Accordingly the preferred amount of the organic peroxide is 0.5 to 5 parts per 100 parts of the polyolefin.

The curable polyolefin composition to be used for the method of the invention may contain a solvent having affinity for the polyolefin base. The solvent having affinity for the polyolefin means a solvent which dissolves the polyolefin at a temperature at least lower than the melting point of the polyolefin, preferably at room temperature, to make the composition liquid or pasty or to reduce the composition to the state of a semi-solid which is applicable with a trowel.

Examples of such solvents are hydrocarbons, such as benzene, toluene, xylene (xylene mixture, p-xylene or the like), durene, mesitylene, decalin, tetralin and olefin oligomers which are liquid at room temperature, nitrogen-containing hydrocarbons, such as aniline, quinoline, N-methylpyrrolidone, dimethylformamide and dimethylacetamide, oxygen-containing hydrocarbons, such as tetrahydrofuran, formic acid, malonic acid ester, methyl isobutyl ketone, cyclohexanone, diphenyl ether and 2-ethylhexanol, and other organic compounds, such as dimethylsulfoxide, hexamethylphosphamide and o-dichlorobenzene.

The amount of the solvent to be used, although varying

with the solubility of the polyolefin therein, is such that the composition will be in the form of a liquid or a semi-solid of the above-mentioned consistency at a temperature within the foregoing range. The optimum amount, which can be determined empirically, is for example 10 to 2,000 parts per 100 parts of the polyolefin. However, a large amount of solvent, if used, requires much time for the evaporation of the solvent after application and is likely to produce bubbles in the layer of the composition, so that it is preferable to use up to 1,500 parts, more preferably up to 1,000 parts, of the solvent per 100 parts of the polyolefin.

When the solvent is used, it is desired that the polyolefin be at least about 10,000 in molecular weight and up to 100 in MI. Further insofar as the polyolefin is soluble in the organic solvent to be given below, the polyolefin may have a super high molecular weight and a MI of as low as up to 1.

When the solvent is used, it is further desirable to use a compound having in the molecule at least two functional groups, that is radically reactive groups containing a carbon-carbon double bond. Examples of such compounds are di- to tetra-functional aromatic, aliphatic and alicyclic compounds and metal-containing compounds. Preferably such compounds are 50 to 100,000, more preferably 100 to 10,000, in molecular weight. More specific examples are as follows.

(1) Polyfunctional armatic compounds, such as divinylbenzene, diallylphthalate, diallylisophthalate, 4,4'-isopropylidene-diphenylbis(diethyleneglycolmethacrylate)ether, triallyl-

trimellitate and 2,2'-bis(4-acryloxydiethoxyphenyl)propane.

(2) Polyfunctional aliphatic compounds, such as syn-1,2-polybutadiene, 1,4-butylene dimethacrylate, 1,4-butanediol diacrylate, pentaerythritol triacrylate, N,N'-methylenebisacrylamide, ethyleneglycol dimethacrylate, neopentylglycol dimethacrylate, 1,3-butyleneglycol dimethacrylate, polyethyleneglycol dimethacrylate and trimethylolpropane trimethacrylcate.

(3) Polyfunctional alicyclic compounds, such as triallyl isocyanurate, triallyl cyanurate, triacryloylhexahydro-1,3,5-triazine and diallyl chlorendate.

(4) Polyfunctional metal-containing compounds, such as aluminum acrylate, aluminum methacrylate, zinc methacrylate, zinc acrylate, magnesium methacrylate, magnesium acrylate, calcium methacrylate, calcium acrylate, zirconium acrylate and zirconium methacrylate.

The most preferable of these polyfunctional compounds are polyfunctional nitrogen-containing cyclic compounds, such as triallyl isocyanurate and triacryloyl-hexahydro-1,3,5-triazine.

The polyfunctional compound is used in an amount of 0.1 to 20 parts, preferably 0.5 to 10 parts, more preferably 0.5 to 5 parts, per 100 parts of the combined amount of polyolefin and peroxide.

As already stated, the curable polyolefin composition of the invention preferably has an antioxidant incorporated therein. The antioxidant prevents the deterioration through oxidation of the polyolefin in the composition due to the high

temperature during the adhesion of cured polyolefin articles. Suitably usable is any of antioxidants having such a function and including those used for rubbers, plastics, petroleum products, foods, etc. for inhibiting oxidation. Typical of useful antioxidants are as follows.

(1) Aromatic amine derivatives

1) Paramine (p-phenylenediamine) derivatives, such as N,N'-dinaphthylparamine and N,N'-diphenylparamine.

2) Ketone-amine condensation products, such as 2,2,4-trimethyl-1,2-dihydroquinoline.

3) Aldehyde-amine condensation products.

4) Naphthylamines.

5) Diphenylamine derivatives.

6) Diallyldiamines.

7) Other amines, such as aromatic amines, substituted aromatic amines and high-molecular-weight amine compounds.

(2) Phenol derivatives

1) Monophenols, such as 3-methyl-6-butylphenol and 2,6-dibutyl-4-methylphenol.

2) Polyphenols.

3) Bisphenols, such as 4,4'-butylidenebis(3-methyl-6-butylphenol) and high-molecular-weight hindered phenol.

4) Thiobisphenols, such as 4,4'-thiobis(3-methyl-6-butylphenol).

(3) Others

1) Thio organic acids (salts and esters thereof)

2) Thioureas, such as alkylthioureas.

3) Phosphorous acid esters.

4) Imidazoles and thiazoles.

5) Azines.

Such antioxidants are used singly or in admixture, preferably in an amount of 0.2 to 5 parts per 100 parts of the polyolefin.

It is desirable to add a sulfur-type curing agent to the curable polyolefin composition since the agent increases the curing density to give enhanced bond strength. Examples of useful sulfur-type curing agents are those heretofore known as such and include sulfurs such as powdery sulfur, flower of sulfur and colloidal sulfur, thiazoles such as 2-mercaptobenzothiazole, sulfenamides such as N-cyclohexyl-2-benzothiazylsulfenamide, thiurams such as tetrathiuram monosulfide, tetramethylthiuram disulfide and tetraethylthiuram monosulfide, Na, K, Pb and like metal salts of dithiocarbamic acid such as dimethylthiocarbamic acid or the like and other sulfur compounds such as sulfur monochloride, morpholine disulfide and alkylphenol disulfide.

When the sulfur-type curing agent is used in a smaller amount, the resulting bond strength will be lower. While use of an excess of the sulfur-type curing agent is not particularly objectionable, there is the tendency that the effect thereby achieved will not increase when the amount thereof exceeds a certain amount, so that the preferred amount to be used is 0.2 to 10 parts per 100 parts by weight of the polyolefin.

The present invention will be described in greater

detail with reference to the following examples and comparison examples.

Example 1

A polyethylene, 0.92 g/$cm^2$ in density d and 1.1 g/10 min in MI, was cured with use of dicumyl peroxide to obtain two pipes each having an outside diameter of 91 mm and a wall thickness of 10 mm and made of cured polyethylene having a gel fraction of 80% as determined according to ASTM D 2765 (the same as hereinafter). The pipes are cut to form end faces perpendicular to the pipe axis and fittable to each other for bonding. A curable polyolefin composition comprising an ethylene-vinyl acetate copolymer containing 5% of vinyl acetate and dicumyl peroxide in an amount of 2 parts per 100 parts of the copolymer was molded by a press at 120°C for 5 minutes into rings 2 mm in thickness, 71 mm in inside diameter and 91 mm in outside diameter. The ring was interposed between the end faces of the pipes and held pressed at a pressure of 20 kg/$cm^2$ by a jig mounted on the pipes while the joint portion was being maintained at 230°C for 10 minutes in its entirety. The pipe assembly thus prepared was tested for strength against water pressure by the method described below, with the result that the joint portion ruptured at a water pressure of 50 kg/$cm^2$. The pipes of cured polyethylene used in Example 1 were 53 kg/$cm^2$ in strength against water pressure. It will be understood that the pipe joint portion obtained in Example 1 is comparable to these pipes in strength against water pressure.

Water pressure test

The pressure of water filling a pipe is progressively increased at a rate of 20 $kg/cm^2$/min to rupture the pipe. The water pressure at which the pipe ruptured is measured as the strength of the pipe against water pressure.

A pipe assembly was prepared in the same manner as above. A specimen including the joint portion was cut off from the assembly and subjected to a tensile test according to JIS K 6774, Sec. 6.6. The specimen was found to have a tensile strength of 1.90 $kg/mm^2$.

Examples 2-57 and Comparison Examples 1-10

In Examples 2-57, pipes of the same dimensions as those used in Example 1 were bonded under the same conditions as in Example 1 (pressure 20 $kg/cm^2$, 230°C x 10 min.). However, the pipes were of varying kinds, and curable polyolefin compositions of different kinds were used as listed in Table 1.

The curable polyolefin compositions used in Examples 2-44 and Examples 55-57 were in the form of annular sheets molded under the same conditions as in Example 1 and measuring 2 mm in thickness, 71 mm in inside diameter and 91 mm in outside diameter. The compositions were used in the same manner as in Example 1. The curable polyolefin compositions for Examples 45-49 were prepared by the following method and applied to the opposed end faces of the pipes. After the evaporation of the solvent, the pipes were bonded together in the same manner as in Example 1.

Preparation of curable polyolefin composition;

The ingredients other than the organic peroxide and in the

ratio listed in Table 5 are placed into a solvent heated to a temperature not lower than the melting point of the polyolefin. The mixture is thoroughly stirred to obtain a solution. Subsequently the specified quantities of organic peroxide and sulfur-type curing agent,. are admixed with the solution at a temperature below the decomposition temperature of the organic peroxide.

In each of Examples 50-54, the curable polyolefin composition was heated to 110°C, thereby made fluid and then applied to the opposed pipe end faces.

The pipe assemblies obtained in these examples were tested in the same manner as in Example 1, with the results shown in Table 1.

For comparison, ten kinds of pipes used in Example 1-57 were bonded under the same conditions as in Example 1 with the exception of using no curable polyolefin composition, and the joint portions were tested similarly for strength. The specimens of these comparison examples were 4 to 5 $kg/cm^2$ in strength against water pressure and 0.1 to 0.3 $kg/cm^2$ in tensile strength.

These examples and comparison examples reveal difficulties in bonding cured polyolefin pipes by heat adhesion and the outstanding effect achieved by the present invention.

For the interpretation of the abbreviations representing the names of materials and chemicals and listed in Table 1 and the following tables, see the remarks in Table 9.

Example 58

A sheet, 10 cm x 10 cm and 0.5 mm in thickness, was prepared from the same curable polyolefin composition as used in Example 18 by shaping the composition with a press at 125°C for 2 minutes. The sheet was sandwiched between two cured sheets 10 cm x 10 cm and 4 mm in thickness and made of XPE-1 with a gel fraction of 80%. The assembly was pressed at a pressure of 50 $kg/cm^2$ at 220°C for 10 minutes to adhere the cured sheets to each other.

The joint portion was found to have a peel strength of 38 kg/10-mm width when tested according to JIS K 6854 (T-peel test) using a 10-mm-wide specimen.

Examples 59-109 and Comparison Examples 11-16

For Examples 59-109, sheets of various cured polyolefins and measuring 10 cm x 10 cm and 2 to 5 mm in thickness were adhered using curable polyolefin composition layers of different kinds and thicknesses under varying conditions as listed in Table 2. In Examples 59-82 and Examples 108 and 109, curable polyolefin compositions, solid at room temperature, were made into sheets and used in the same manner as in Example 58. In Examples 83-96, curable polyolefin compositions were prepared and applied in the same manner as in Examples 45-49. In Examples 97-107, curable polyolefin compositions were heated to 110°C and then applied. Table 2 shows peel strengths measured by the same method as in Example 58.

Six kinds of cured polyolefin sheets used in Examples 58-109 were adhered with application of a pressure of 25 $kg/cm^2$ or

50 kg/$cm^2$, at 220°C or 230°C, for 5 minutes or 10 minutes, without using any curable polyolefin composition. All specimens were up to 2.0 kg/10-mm width in peel strength.

Examples 110-118 and Comparison Example 17

Base compositions A, B and C given below were prepared with use of a roll mill using EPDM, EVA, PE or EB as a resin base. Specimens, each in the form of a 1-mm-thick sheet, were prepared from these compositions by curing the base composition A at 160°C for 30 minutes, the base composition B at 175°C for 30 minutes, and the base composition C at 170°C for 30 minutes. The specimens were cut into specimen pieces each in the form of a strip 10 mm in width and 100 mm in length. Two specimen strips prepared from the same base composition were uniformly coated, each on one side thereof, with one of the polyolefin compositions listed in Table 7 to a thickness of about 100 μm when dried upon evaporation of the solvent. The specimen pieces were superposed on each other with the coatings opposed face-to-face, and the assembly was heat-treated under a pressure of 50 kg/$cm^2$ at 165°C for 45 minutes when the peroxide in the polyolefin composition was DCP, or at 170°C for 45 minutes when it was BPPB, or at 155°C for 45 minutes when it was MBPH.

With use of a tensile tester (Schopper's type), the two specimen pieces of each assembly were peeled off each other at a speed of 200 mm/min to measure the bond strength at the interface. Peel strength values were measured over a 10-cm-long portion

centered about the midpoint of the assembly longitudinally thereof, and the maximum of the values was taken as the bond strength of the specimen. Table 7 shows the result. As Comparison Example 17, the above procedure was repeated without applying the composition of this invention to the interface. The result is also shown in Table 7.

Base composition A

| | |
|---|---|
| EPDM ("MITSUI EPT 4045", product of Mitsui Petrochemical Co., Ltd., Japan) | 100 parts |
| Zinc white | 5 parts |
| Stearic acid | 1 part |
| Process oil | 114 parts |
| Clay (White tex #2) | 110 parts |
| DCP | 3 parts |

Base composition B

| | |
|---|---|
| PE ("Yukalon ZF-30", product of Mitsubishi Petrochemical Co., Ltd., Japan) | 100 parts |
| BBMP ("Nocrac 300", product of Ohuchi-Shinko Chemical Industrial Co., Ltd. | 0.5 parts |
| DCP | 2 parts |

Base composition C

| | |
|---|---|
| EVA ("Sholex EVA CM22-1", product of Showa Denko Co., Ltd., Japan) | 100 parts |
| BBMP | 0.5 parts |
| BPPB | 1.5 parts |

## Examples 119-139

Prepared for these examples were pipes of cured polyolefins listed in Table 8 and measuring 27 mm in inside diameter and 34 mm in outside diameter, and socket joints of cured polyolefins

listed in Table 8 and measuring 34 mm in inside diameter and 42 mm in outside diameter. Grease and water were removed from the outer surfaces of the spigot ends of the pipes and the inner surfaces of the sockedt ends of the joints with dry cloth. The spigot end inner edge of each pipe was cut away at an angle of about 30° to about one half of its wall thickness to form a chamfer.

The pipe and the joint were inserted into an electrically heated connecting jig, heated at about 230°C for 2 minutes and then removed from the jig. An adhesive separatedly prepared and comprising one of the curable polyolefin compositions listed in Table 8 was quickly wound around or applied to the outer surface of the pipe spigot end, and the pipe was inserted into one socket end of the joint.

The joint portion was held at rest for bonding until the surface temperature of the portion lowered to about 50°C. The joint portion was thereafter heated again to about 230°C with a torch lamp. The heating was discontinued when a crayon applied to the portion for indicating a temperature of 230°C melted. The joint portion was thereafter allowed to cool for solidification.

Another pipe was subsequently bonded to the other socket end of the joint in the same manner as above.

When the curable polyolefin composition to be used was one which it was possible to shape into a film, the composition was made into strips having a width of 18 mm which was equal to the length of insertion of the pipe and a length

of 128 mm which corresponded to 1.2 times the outer circumference of the pipe. The strip was quickly wound around the outer surface of the pipe spigot end immediately after the pipe was removed from the jig heated to about 230°C.

If the curable polyolefin composition was not shapable into a film, it was prepared in the form of a paste. The paste was heated to a temperature of up to 130°C to a reduced viscosity and then quickly applied to the outer surface of the heated pipe with a brush adapted to form a coating over a width of about 18 mm.

In the above procedure, the joint portion was cooled to about 50°C once and thereafter heated again in order to completely decompose the curing agent contained in the polyolefin composition applied.

The joint portion obtained in Examples were tested by the following method. Table 8 shows the results.

Water pressure test after heat cycle

An approximately 800-mm-long specimen including the socket joint portion at its midportion was cut off from each pipe assembly. While being subjected to an internal pressure of 5 $kg/cm^2$, the pipe specimen was heated at 80°C for 1 hour and then cooled at 25°C for 1 hour, and this cycle was repeated five times. The pipe specimen was thereafter tested for strength against water pressure at 25°C according to JIS K 6774, Sec. 6.8.

Comparison Example 18

Pipes made of the same material as the ones used in Example 119 and measuring 27 mm in inside diameter and 34 mm

in outside diameter were connected with use of sockets of the B type (metal joints) shown in Japan Water Work Association Standards JWWA B-116, Diagram 4. The pipe joint portions were tested in the same manner as in Example 119.

Test result

Water pressure test after heat cycle (n=3)

Of the three specimens tested, two specimens developed a leak from the joint portion during the first cycle, and one specimen similarly developed a leak during the third cycle. Although the specimens were further subjected to another cycle each with its metal joint tightened up, leaks occurred in all the three specimens during the resumed cycle. Thus the specimens were not in condition for testing under water pressure.

TABLE 1-1

| | Example No. | 1 | 2 | 3 | 4 | 5 | 6 | 7 |
|---|---|---|---|---|---|---|---|---|
| Pipe | Material | X P E - 1 | do. | do. | do. | do. | do. | X P E - 2 |
| | Gel fraction (%) | 80 | do. | do. | do. | do. | do. | 71 |
| | Polyolefin Composition (Weight part) | EVA (VA : 5%) ..... 100 parts DCP ..... 2 parts | EVA (VA : 15%) ..... 100 parts MBPH ..... 2.5 parts | EVA (VA : 15%) ..... 100 parts BPPB ..... 5 parts | EVA (VA : 15%) ..... 100 parts BPMH ..... 6 parts | EEA (EA : 20%) ..... 100 parts DCP ..... 4 parts | PE (d : 0.95, MI : 10) ..... 100 parts DCP ..... 10 parts | Same as Ex. 1 |
| Water pressure test | Strength against Water pressure ($Kg/cm^2$) | 50 | 50 | 50 | 50 | 48 | 49 | 52 |
| | Breaked portion | Joint portion | do. | do. | do. | do. | do. | do. |
| Tensile test | Tensile strength $Kg/mm^2$ | 1.9 | 2.2 | 2.1 | 2.4 | 1.7 | 1.5 | 1.9 |
| | Cutted portion | Joint portion | do. | do. | Pipe | Joint portion | do. | do. |

TABLE 1-2

| | | 8 | 9 | 10 | 11 | 12 | 13 | 14 |
|---|---|---|---|---|---|---|---|---|
| Example No. | | 8 | 9 | 10 | 11 | 12 | 13 | 14 |
| Pipe | Material | X P E - 2 | do. | do. | do. | do. | X P P - 1 | X P P - 2 |
| | Gel fraction (%) | 71 | do. | do. | do. | do. | 75 | 72 |
| Polyolefin Composition (Weight part) | | Same as Ex. 2 | Same as Ex. 3 | Same as Ex. 4 | Same as Ex. 5 | Same as Ex. 6 | Same as Ex. 1 | do. |
| Water pressure test | Strength against Water pressure ($Kg/cm^2$) | 50 | 52.5 | 51.5 | 50.5 | 49.5 | 50 | 51.5 |
| | Breaked portion | Joint portion | do. | do. | do. | do. | do. | do. |
| Tensile test | Tensile strength $Kg/mm^2$ | 2.0 | 2.3 | 2.4 | 2.1 | 1.8 | 2.5 | 2.8 |
| | Cutted portion | Joint portion | Pipe | do. | do. | Joint portion | do. | Pipe |

TABLE 1-3

| | Example No. | 15 | 16 | 17 | 18 | 19 | 20 | 21 |
|---|---|---|---|---|---|---|---|---|
| Pipe | Material | X E P - 1 | X P ECℓ - 1 | X E V A - 1 | X P E - 1 | do. | X P E -3 | X P P - 3 |
| | Gel fraction (%) | 78 | 81 | 88 | 80 | do. | 72 | 72 |
| | Polyolefin Composition (Weight part) | Same as Ex. 1 | do. | do. | EB (Butene -1: 5%, d : 0.88 MI : 3.2) ..... 100 parts DCP ..... 2 parts | EH (Hexen-1 : 10% d : 0.88 MI : 0.5) ..... 100 parts DCP ..... 2 parts | Same as Ex. 18 | do. |
| Water pressure test | Strength against Water pressure ($Kg/cm^2$) | 47 | 48.5 | 52 | 53 | 53 | 52 | 60 |
| | Breaked portion | Joint portion | do. | Pipe | Pipe | do. | do. | do. |
| Tensile test | Tensile strength $Kg/mm^2$ | 1.4 | 1.7 | 2.0 | 2.0 | 2.0 | 2.3 | 2.5 |
| | Cutted portion | Joint portion | do. | Pipe | do. | do. | do. | do. |

TABLE 1-4

| | Example No. | 22 | 23 | 24 | 25 | 26 | 27 | 28 |
|---|---|---|---|---|---|---|---|---|
| Pipe | Material | X P E - 3 | do. | X P E - 1 | do. | X P E - 3 | X P P - 3 | X P E - 1 |
| | Gel fraction (%) | 72 | 72 | 80 | do. | 72 | 72 | 80 |
| | Polyolefin Composition (Weight part) | EHN (d : 0.88, MI : 1.5) ..... 100 parts DCP ..... 2 parts | EBM (d : 0.88, MI : 3.0) ..... 100 parts DCP ..... 2 parts | PE - M ..... 100 parts DCP ..... 2 parts | PE - A ..... 100 parts DCP ..... 2 parts | Same as Ex. 24 | do. | PP - MA ..... 100 parts DCP ..... 2 parts |
| Water pressure test | Strength against Water pressure ($Kg/cm^2$) | 53 | 53 | 53 | 53 | 56 | 60 | 53 |
| | Breaked portion | Pipe | do. | do. | do. | do. | do. | do. |
| Tensile test | Tensile strength $Kg/mm^2$ | 2.0 | 2.0 | 2.8 | 2.8 | 2.8 | 3.0 | 2.8 |
| | Cutted portion | Pipe | do. | do. | do. | do. | do. | do. |

TABLE 1-5

| | Example No. | 29 | 30 | 31 | 32 | 33 | 34 | 35 |
|---|---|---|---|---|---|---|---|---|
| Pipe | Material | X P E - 1 | do. | do. | do. | X P E - 3 | X EVA - 1 | X P E - 1 |
| | Gel fraction (%) | 80 | do. | do. | do. | 72 | 82 | 80 |
| | Polyolefin Composition (Weight part) | EM ..... 100 parts DCP ..... 2 parts | EVA (VA : 10 %, d : 0.93,MI : 3) ..... 100 parts DCP ..... 2 parts | EEA (EA: 8%, d : 0.93,MI : 0.8) ..... 100 parts DCP ..... 2 parts | EVA (VA: 12%, d : 0.93, MI : 25.0) ..... 100 parts DCP ..... 2 parts | EVA (VA: 15% d : 0.925, MI : 1.1) ..... 100 parts DCP ..... 2 parts | EEA (EA : 8%, d : 0.93, MI : 5.5) ..... 100 parts DCP ..... 2 parts | See Table 3 |
| Water pressure test | Strength against Water pressure ($Kg/cm^2$) | 53 | 53 | 53 | 38 | 53 | 50 | 53 |
| | Breaked portion | Pipe | do. | do. | Joint portion | Pipe | do. | do. |
| Tensile test | Tensile strength $Kg/mm^2$ | 2.8 | 2.1 | 1.9 | 1.1 | 1.9 | 2.0 | 2.3 |
| | Cutted portion | Pipe | do. | do. | Joint portion | Pipe | do. | do. |

TABLE 1-6

| Example No. | | 36 | 37 | 38 | 39 | 40 | 41 | 42 |
|---|---|---|---|---|---|---|---|---|
| Pipe | Material | X P E - 1 | do. | do. | do. | do. | do. | do. |
| | Gel fraction (%) | 80 | do. | do. | do. | do. | do. | do. |
| | Polyolefin Composition (Weight part) | See Table 3 | do. | do. | do. | See Table 4 | do. | do. |
| Water pressure test | Strength against Water pressure ($Kg/cm^2$) | 53 | 53 | 53 | 53 | 53 | 51 | 53 |
| | Breaked portion | Pipe | do. | do. | do. | do. | do. | do. |
| Tensile test | Tensile strength $Kg/mm^2$ | 2.8 | 2.8 | 2.8 | 2.8 | 2.8 | 2.6 | 2.8 |
| | Cutted portion | Pipe | do. | do. | do. | do. | do. | do. |

TABLE 1-7

| | | | | | | | | |
|---|---|---|---|---|---|---|---|---|
| Example No. | | 43 | 44 | 45 | 46 | 47 | 48 | 49 |
| Pipe | Material | X P E - 1 | do. | do. | do. | do. | do. | do. |
| | Gel fraction (%) | 80 | do. | do. | do. | do. | do. | do. |
| Polyolefin Composition (Weight part) | | See Table 4 | do. | See Table 5 | do. | do. | do. | do. |
| Water pressure test | Strength against Water pressure ($Kg/cm^2$) | 53 | 53 | 51 | 53 | 52 | 52 | 53 |
| | Breaked portion | Pipe | do. | do. | do. | do. | do. | do. |
| Tensile test | Tensile strength $Kg/mm^2$ | 2.8 | 2.8 | 2.8 | 2.8 | 2.7 | 2.6 | 2.8 |
| | Cutted portion | Pipe | do. | do. | do. | do. | do. | do. |

TABLE 1-8

| | Example No. | 50 | 51 | 52 | 53 | 54 | 55 | 56 | 57 |
|---|---|---|---|---|---|---|---|---|---|
| Pipe | Material | X P E -1 | do. | do. | do. | do. | do. | X P E - 3 | X P P - 3 |
| | Gel fraction (%) | 80 | do. | do. | do. | do. | do. | 72 | 72 |
| | Polyolefin Composition (Weight part) | See Table 6 | do. | do. | do. | do. | LPE (d : 0.925, mp : 119°C) ..... 100 parts DCP ..... 2 parts | LPE (d : 0.935, mp : 123°C) ..... 100 parts DCP ..... 2 parts | do. |
| Water pressure test | Strength against Water pressure ($Kg/cm^2$) | 53 | 48 | 53 | 53 | 52 | 53 | 53 | 60 |
| | Breaked portion | Pipe | Joint portion | Pipe | do. | do. | do. | do. | do. |
| Tensile test | Tensile strength $Kg/mm^2$ | 2.0 | 2.1 | 2.5 | 2.0 | 1.7 | 2.8 | 2.8 | 3.0 |
| | Cutted portion | Joint portion | do. | Pipe | Joint portion | do. | Pipe | do. | do. |

TABLE 2-1

| | Example No. | 58 | 59 | 60 | 61 | 62 | 63 | 64 |
|---|---|---|---|---|---|---|---|---|
| Cured sheet | Material | X P E - 1 | X E V A - 1 | X P E - 1 | X EVA - 1 | X P P - 4 | X P E - 3 | do. |
| | Gel fraction (%) | 80 | 82 | 80 | 82 | 72 | 70 | do. |
| | Thickness (mm) | 4 | 5 | 5 | 5 | 5 | 4 | 4 |
| Curable polyolefin composition | Component (Weight part) | Same as Ex. 18 | do. | Same as Ex. 24 | do. | EVA (VA : 15%, d : 0.95 MI : 0.9) ..... 100 parts DCP ..... 2 parts | See Table 3 | do. |
| | Thickness (mm) | 0.5 | do. | do. | do. | do. | 0.3 | do. |
| Adhesion condition | Temp. (°C) | 220 | do. | do. | do. | do. | do. | do. |
| | Pressure ($Kg/cm^2$) | 50 | do. | do. | do. | do. | do. | do. |
| | Time (min.) | 10 | do. | do. | do. | do. | 5 | do. |
| Peel test | Peel strength (Kg/10mm) | 38 | > 39 | 43 | 39 | 49 | > 35 | do. |
| | Cutted portion | | Cured sheet | | | | Cured sheet | do. |

TABLE 2-2

| | | 65 | 66 | 67 | 68 | 69 | 70 | 71 |
|---|---|---|---|---|---|---|---|---|
| | Example No. | 65 | 66 | 67 | 68 | 69 | 70 | 71 |
| Cured sheet | Material | XPE-3 | do. | XEVA-1 | do. | do. | do. | XPP-3 |
| | Gel fraction (%) | 70 | do. | 80 | do. | do. | do. | 72 |
| | Thickness (mm) | 4 | 4 | 4 | 4 | 4 | 4 | 2 |
| Curable polyolefin composition | Component (Weight part) | See Table 3 | do. | do. | do. | do. | do. | do. |
| | Thickness (mm) | 0.3 | do. | do. | do. | do. | do. | do. |
| Adhesion condition | Temp. (°C) | 220 | do. | do. | do. | do. | do. | 230 |
| | Pressure ($Kg/cm^2$) | 50 | do. | 25 | do. | do. | do. | 50 |
| | Time (min.) | 5 | do. | do. | do. | do. | do. | do. |
| Peel test | Peel strength (Kg/10mm) | >35 | do. | do. | do. | do. | do. | >25 |
| | Cutted portion | Cured sheet | do. | do. | do. | do. | do. | do. |

T A B L E 2-3

| | | 72 | 73 | 74 | 75 | 76 | 77 | 78 |
|---|---|---|---|---|---|---|---|---|
| Example No. | | 72 | 73 | 74 | 75 | 76 | 77 | 78 |
| Cured sheet | Material | X P P - 3 | X P E - 3 | do. | do. | do. | X E V A - 1 | do. |
| | Gel fraction (%) | 72 | 70 | do. | do. | do. | 80 | do. |
| | Thickness (mm) | 2 | 4 | do. | do. | do. | 4 | do. |
| Curable polyolefin composition | Component (Weight part) | See Table 3 | See Table 4 | do. | do. | do. | do. | do. |
| | Thickness (mm) | 0.3 | do. | do. | do. | do. | do. | do. |
| Adhesion condition | Temp. (°C) | 230 | 220 | do. | do. | do. | do. | do. |
| | Pressure (Kg/cm. 2) | 50 | 50 | do. | do | do. | 25 | do. |
| | Time (min.) | 5 | 5 | do. | do. | do. | do. | do. |
| Peel test | Peel strength (Kg/10mm) | > 25 | > 35 | > 35 | > 35 | ≥ 35 | > 35 | > 35 |
| | Cutted portion | Cured Sheet | do. | do. | do. | do. | do. | do. |

TABLE 2-4

| | | 79 | 80 | 81 | 82 | 83 | 84 | 85 |
|---|---|---|---|---|---|---|---|---|
| Example No. | | 79 | 80 | 81 | 82 | 83 | 84 | 85 |
| Cured sheet | Material | XEVA-1 | do. | XPP-3 | do. | XPE-3 | do. | do. |
| | Gel fraction (%) | 80 | do. | 72 | do. | 70 | do. | do. |
| | Thickness (mm) | 4 | do. | 2 | do. | do. | do. | do. |
| Curable polyolefin composition | Component (Weight part) | See Table 4 | do. | do. | do. | See Table 5 | do. | do. |
| | Thickness (mm) | 0.3 | do. | do. | do. | --- | --- | --- |
| Adhesion condition | Temp. (°C) | 220 | do. | 230 | do. | 220 | do. | do. |
| | Pressure ($Kg/cm^2$) | 25 | do. | do. | do. | 50 | do. | do. |
| | Time (min.) | 5 | do. | do. | do. | do. | do. | do. |
| Peel test | Peel strength (Kg/10mm) | >35 | >35 | >25 | >25 | 13 | 20 | 18 |
| | Cutted portion | Cured sheet | do. | do. | do. | | Cured sheet | |

TABLE 2-5

| | | 86 | 87 | 88 | 89 | 90 | 91 | 92 |
|---|---|---|---|---|---|---|---|---|
| | Example No. | 86 | 87 | 88 | 89 | 90 | 91 | 92 |
| Cured sheet | Material | X P E - 3 | do. | do. | do. | X E V A - 1 | do. | do. |
| | Gel fraction (%) | 70 | do. | do. | do. | 80 | do. | do. |
| | Thickness (mm) | 2 | do. | do. | do. | do. | do. | do. |
| Curable polyolefin composition | Component (Weight part) | See Table 5 | do. | do. | do. | do. | do. | do. |
| | Thickness (mm) | --- | --- | --- | --- | --- | --- | --- |
| Adhesion condition | Temp. (°C) | 220 | do. | do. | do. | do. | do. | do. |
| | Pressure ($Kg/cm^2$) | 50 | do. | do. | do. | 25 | do. | do. |
| | Time (min.) | 5 | do. | do. | do. | 5 | do. | do. |
| Peel test | Peel strength (Kg/10mm) | 19 | 20 | 20 | 21 | 18 | 16 | 19 |
| | Cutted portion | | Cured sheet | Sheet | do. | do. | | Sheet |

TABLE 2-6

| | | 93 | 94 | 95 | 96 | 97 | 98 | 99 |
|---|---|---|---|---|---|---|---|---|
| | Example No. | 93 | 94 | 95 | 96 | 97 | 98 | 99 |
| Cured sheet | Material | X E V A - 1 | do. | X P P - 3 | do. | X P E - 3 | do. | do. |
| | Gel fraction (%) | 80 | do. | 72 | do. | 70 | do. | do. |
| | Thickness (mm) | 2 | do. | do. | do. | do. | do. | do. |
| Curable polyolefin composition | Component (Weight part ) | See Table 5 | do. | do. | do. | See Table 6 | do. | do. |
| | Thickness (mm) | --- | --- | --- | --- | --- | --- | --- |
| Adhesion condition | Temp. (°C) | 220 | do. | 230 | do. | 220 | do. | do. |
| | Pressure (Kg/cm $^2$) | 25 | do. | 50 | do. | do. | do. | do. |
| | Time (min.) | 5 | do. | do. | do. | do. | do. | do. |
| Peel test | Peel strength (Kg/10mm) | 19 | 17 | 20 | 24 | 18 | 17 | 19 |
| | Cutted portion | Sheet | | | Sheet | | | |

TABLE 2-7

| | Example No. | 100 | 101 | 102 | 103 | 104 | 105 | 106 |
|---|---|---|---|---|---|---|---|---|
| Cured sheet | Material | X P E -3 | do. | X E V A - 1 | do. | do. | do. | X P P -3 |
| | Gel fraction (%) | 70 | do. | 80 | do. | do. | do. | 72 |
| | Thickness (mm) | 2 | do. | do. | do. | do. | do. | do. |
| Curable polyolefin composition | Component (Weight part) | See Table 6 | do. | do. | do. | do. | do. | do. |
| | Thickness (mm) | --- | --- | --- | --- | --- | --- | --- |
| Adhesion condition | Temp. (°C) | 220 | do. | do. | do. | do. | do. | 230 |
| | Pressure ($Kg/cm^2$) | 50 | do. | 25 | do. | do. | do. | 50 |
| | Time (min.) | 5 | do. | do. | do. | do. | do. | do. |
| Peel test | Peel strength (Kg/10mm) | 16 | 19 | 20 | 20 | 20 | 18 | 20 |
| | Cutted portion | | | Sheet | Sheet | Sheet | | |

TABLE 2-8

| | | | | |
|---|---|---|---|---|
| | Example No. | 107 | 108 | 109 |
| Cured sheet | Material | X P P - 3 | X P E - 1 | X E V A - 2 |
| | Gel fraction (%) | 72 | 80 | 80 |
| | Thickness (mm) | 2 | 5 | do. |
| Curable polyolefin composition | Component (Weight part) | See Table 6 | Same as Ex. 55 | Same as Ex. 56 |
| | Thickness (mm) | --- | 0.5 | do. |
| Adhesion condition | Temp. (°C) | 230 | 220 | do. |
| | Pressure ($Kg/cm^2$) | 50 | do. | do. |
| | Time (min.) | 5 | 10 | do. |
| Peel test | Peel strength (Kg/10mm) | 20 | 38 | 41 |
| | Cutted portion | | Sheet | Sheet |

TABLE 3-1

| | Example No. | | 35 | 36 | 37 | 38 | 39 | 63 | 64 | 65 |
|---|---|---|---|---|---|---|---|---|---|---|
| Polyolefin | PE | (Note 1) | 40 | — | — | — | — | — | — | — |
| | LPE | (Note 2) | — | — | — | — | 100 | — | — | — |
| | LPE | (Note 3) | — | — | — | — | — | — | — | 100 |
| | PE | (Note 4) | — | 70 | — | — | — | — | — | — |
| | PE-M | | — | — | — | — | — | — | 100 | — |
| | EVA | (Note 5) | — | — | 80 | — | — | — | — | — |
| | EB | (Note 6) | — | — | 20 | 100 | — | 100 | — | — |
| | EEA | (Note 7) | — | 30 | — | — | — | — | — | — |
| | EPDM | (Note 8) | 60 | — | — | — | — | — | — | — |
| Organic peroxide | DCP | | 2 | — | 2 | 2 | — | 2 | 2 | — |
| | BPPB | | — | 1.5 | — | — | 1.5 | — | — | 1.5 |
| Sulfur type curing agent | Powdered sulfur | | 2 | 5 | — | 2 | — | 3 | 1 | — |
| | Colloidal sulfur | | — | — | 0.5 | — | — | — | — | — |
| | TMTDS | | — | — | — | — | 2 | 1 | — | — |
| | MBT | | — | — | — | — | — | — | — | 2 |
| | MTCZ | | — | — | — | — | — | — | — | — |
| | NHBTSA | | — | — | — | — | — | — | — | — |

TABLE 3-2

| Example No. | | | 66 | 67 | 68 | 69 | 70 | 71 | 72 |
|---|---|---|---|---|---|---|---|---|---|
| Polyolefin | PE | (Note 1) | — | — | — | — | 40 | — | — |
| | LPE | (Note 2) | 50 | — | 50 | 50 | — | 50 | — |
| | LPE | (Note 3) | — | — | — | — | — | — | — |
| | PE | (Note 4) | — | — | — | — | — | — | — |
| | PE -M | | — | — | — | — | — | — | 80 |
| | EVA | (Note 5) | 50 | 100 | — | — | — | — | — |
| | EB | (Note 6) | — | — | — | — | — | — | 20 |
| | EEA | (Note 7) | — | — | — | — | — | 50 | — |
| | EPDM | (Note 8) | — | — | 50 | 50 | 60 | — | — |
| Organic peroxide | DCP | | 2 | 2 | 2 | — | 2 | 2 | 2 |
| | BPPB | | — | — | — | 1.5 | — | — | — |
| Sulfur type curing agent | Powdered sulfur | | — | 2 | 10 | — | — | — | — |
| | Colloidal sulfur | | 2 | — | — | — | — | 2 | 2 |
| | TMTDS | | — | — | — | — | — | — | — |
| | MBT | | — | — | — | — | — | — | — |
| | MTCZ | | — | — | — | — | 2 | — | — |
| | NHBTSA | | — | — | — | 2 | — | — | — |

TABLE 4-1

| Example No. | | | 40 | 41 | 42 | 43 | 44 | 73 | 74 | 75 | 76 |
|---|---|---|---|---|---|---|---|---|---|---|---|
| Polyolefin | PE | (Note 1) | — | — | — | — | — | — | — | — | — |
| | LPE | (Note 2) | — | — | — | — | 70 | — | — | — | 50 |
| | LPE | (Note 3) | 100 | — | — | — | — | — | — | 100 | — |
| | PE | (Note 4) | — | 70 | — | — | — | — | — | — | — |
| | PE-M | | — | — | 20 | — | — | — | 100 | — | — |
| | EVA | (Note 5) | — | — | — | 100 | — | — | — | — | 50 |
| | EB | (Note 6) | — | — | 80 | — | — | 100 | — | — | — |
| | EEA | (Note 7) | — | — | — | — | 30 | — | — | — | — |
| | EPDM | (Note 8) | — | 30 | — | — | — | — | — | — | — |
| Organic peroxide | DCP | | 2 | — | 2 | 2 | — | 2 | 2 | — | 2 |
| | MBPH | | — | 1.5 | — | — | 1.5 | — | — | 1.5 | — |
| Anti oxidant | NNP | | — | — | — | — | 2 | — | — | — | — |
| | MHQ | | 2 | — | 0.2 | — | — | 1 | — | — | 4 |
| | MBI | | — | 2 | — | — | — | — | — | — | — |
| | BMP | | — | — | — | — | — | — | — | 2 | — |
| | TMBP | | — | — | — | — | — | 1 | — | — | — |
| | MBHPM | | — | — | — | 2 | — | — | 1.5 | — | — |
| Sulfur type curing agent | Powdered sulfur | | — | — | — | — | 1 | — | — | 0.3 | 0.3 |
| | TMTDS | | — | — | 0.5 | — | — | — | — | — | — |
| | MBT | | — | — | — | — | — | — | — | — | — |
| | NHBTSA | | — | — | — | — | — | — | 0.5 | — | — |

TABLE 4-2

| Example No. | | | 77 | 78 | 79 | 80 | 81 | 82 |
|---|---|---|---|---|---|---|---|---|
| Polyolefin | PE | (Note 1) | — | — | — | 40 | — | — |
| | LPE | (Note 2) | — | 50 | 50 | — | 50 | — |
| | LPE | (Note 3) | — | — | — | — | — | — |
| | PE | (Note 4) | — | — | — | — | — | — |
| | PE-M | | — | — | — | — | — | 80 |
| | EVA | (Note 5) | 100 | — | — | — | — | — |
| | EB | (Note 6) | — | — | — | — | — | 20 |
| | EEA | (Note 7) | — | — | — | — | 50 | — |
| | EPDM | (Note 8) | — | 50 | 50 | 60 | — | — |
| Organic-peroxide | DCP | | 2 | 2 | — | 2 | 2 | 2 |
| | MBPH | | — | — | 1.5 | — | — | — |
| Anti oxidant | NNP | | 2 | — | — | — | — | — |
| | MHQ | | 0.5 | — | — | — | 2 | 2 |
| | MBI | | — | 2 | — | — | — | — |
| | BMP | | — | — | — | — | — | — |
| | TMBP | | — | — | — | 2 | — | — |
| | MBHPM | | — | — | 2 | — | — | — |
| Sulfur type curing agent | Powdered sulfur | | — | 0.3 | — | 5 | — | 1 |
| | TMTDS | | — | — | — | — | — | — |
| | MBT | | — | — | 1 | — | — | — |
| | NHBTSA | | — | — | — | — | — | — |

TABLE 5-1

| | Example No. | 45 | 46 | 47 | 48 | 49 | 83 | 84 | 85 | 86 | 87 | 88 |
|---|---|---|---|---|---|---|---|---|---|---|---|---|
| Polyolefin | PE (Note 1) | — | — | — | — | — | 50 | — | — | 40 | 40 | — |
| | LPE (Note 2) | — | — | — | — | 60 | — | 100 | — | — | — | — |
| | LPE (Note 3) | — | — | 50 | — | — | — | — | — | — | — | — |
| | PE (Note 4) | — | — | — | — | — | — | — | 40 | — | — | — |
| | PE-M | 100 | 100 | — | — | — | — | — | — | — | — | — |
| | EVA (Note 5) | — | — | — | 80 | — | — | — | — | — | — | — |
| | EVA (Note 9) | — | — | — | — | — | 50 | — | — | — | — | — |
| | EB (Note 6) | — | — | 50 | — | 40 | — | — | — | — | — | 100 |
| | EEA (Note 7) | — | — | — | 20 | — | — | — | — | — | — | — |
| | EPDM (Note 8) | — | — | — | — | — | — | — | 60 | 60 | 60 | — |
| Organic peroxide | DCP | 3 | — | — | 2 | 2 | 3 | — | — | 3 | 3 | 1.5 |
| | BPPB | — | 2 | 2 | — | — | — | 2 | 2 | — | — | — |
| Sulfur type curing agent | Colloidal sulfur | — | — | 1 | — | 2 | — | — | 5 | 0.3 | — | — |
| | MTCZ | — | — | — | — | — | — | — | — | — | 2 | — |
| | TMTDS | — | — | — | 1 | — | 0.5 | — | — | — | — | — |
| | MBT | — | — | — | — | — | — | — | — | — | — | — |
| Anti oxidant | PNA | — | — | — | — | — | — | — | 2 | — | 1 | — |
| | MHQ | — | 0.5 | — | — | — | 0.5 | 1 | — | — | 0.5 | — |
| | TBMP | — | — | — | 1 | — | — | — | — | — | — | — |
| | MBHPM | 0.5 | — | — | — | 1.5 | — | — | — | — | — | — |
| Solvent | Xylene | 1000 | 1000 | 1000 | 500 | 1000 | 1000 | — | — | 800 | 800 | 800 |
| | Decahydro-naphthalene | — | — | — | — | — | — | 1000 | 1000 | — | — | — |

| Example No. | | 89 | 90 | 91 | 92 | 93 | 94 | 95 | 96 |
|---|---|---|---|---|---|---|---|---|---|
| Polyolefin | PE (Note 1) | — | — | — | — | — | — | — | — |
| | LPE (Note 2) | — | — | 50 | — | — | — | 50 | — |
| | LPE (Note 3) | 80 | — | — | — | — | — | — | — |
| | PE (Note 4) | — | — | — | — | — | — | — | — |
| | PE-M | — | — | — | — | 80 | — | — | 80 |
| | EVA (Note 5) | — | 100 | — | — | — | — | — | — |
| | EVA (Note 9) | 20 | — | 50 | 20 | 20 | — | — | 20 |
| | EB (Note 6) | — | — | — | 80 | — | — | — | — |
| | EEA (Note 7) | — | — | — | — | — | 100 | 50 | — |
| | EPDM (Note 8) | — | — | — | — | — | — | — | — |
| Organic peroxide | DCP | — | 2 | — | 2 | — | 2 | — | — |
| | BPPB | 1.5 | — | 2 | — | 2 | — | 1.5 | 1.5 |
| Sulfur type curing agent | Colloidal sulfur | — | 2 | — | — | — | — | 1 | — |
| | MTCZ | — | — | — | — | — | — | — | — |
| | TMTDS | — | — | 1 | 1 | — | — | — | — |
| | MBT | — | — | — | — | 1 | — | — | — |
| Anti oxidant | PNA | — | — | — | — | 2 | — | — | — |
| | MHQ | — | 2 | 1 | 2 | 1 | — | — | — |
| | TBMP | 1.5 | — | — | — | — | — | — | — |
| | MBHPM | — | — | 1 | — | 1 | — | 1 | 1 |
| Solvent | Xylene | 1000 | 1000 | 1000 | 1000 | 1000 | 1000 | 1000 | 1000 |
| | Decahydro-naphthalene | — | — | — | — | — | — | — | — |

TABLE 6-1

| | Example No. | 50 | 51 | 52 | 53 | 54 |
|---|---|---|---|---|---|---|
| Polyolefin | PE (Note 1) | — | 15 | — | — | — |
| | LPE (Note 2) | — | 5 | — | — | — |
| | PE-M | — | — | — | — | 10 |
| | PE (Note 10) | — | — | — | — | — |
| | EVA (Note 11) | 100 | — | — | — | — |
| | EVA (Note 12) | — | 80 | — | — | 80 |
| | EVA (Note 13) | — | — | 100 | — | — |
| | EVA (Note 14) | — | — | — | — | — |
| | EVA (Note 15) | — | — | — | — | — |
| | EEA (Note 16) | — | — | — | — | — |
| | EAC (Note 17) | — | — | — | 100 | — |
| | EB (Note 7) | — | — | — | — | — |
| | EPDM (Note 18) | — | — | — | — | 10 |
| | PB (Note 19) | — | — | — | — | — |
| | PI (Note 20) | — | — | — | — | — |
| Organic peroxide | DCP | 3 | — | 3 | 3 | — |
| | MBPH | — | 2 | — | — | 2 |
| Sulfur type curing agent | Colloidal sulfur | — | 1 | 1 | 1 | — |
| | TMTDS | — | — | — | — | 1 |
| | MBT | — | — | — | — | — |
| Anti oxidant | MHQ | 2 | — | 2 | 0.5 | 2 |
| | PNA | — | — | — | — | 0.5 |
| | TBMP | — | 0.5 | — | — | — |
| | MBHPM | — | — | — | 0.5 | — |

TABLE 6-2

| | Example No. | 97 | 98 | 99 | 100 | 101 | 102 |
|---|---|---|---|---|---|---|---|
| Polyolefin | PE (Note 1) | — | — | — | — | — | — |
| | LPE (Note 2) | — | 5 | — | 10 | — | — |
| | PE-M | — | — | 5 | — | — | — |
| | PE (Note 10) | — | — | — | 20 | — | — |
| | EVA (Note 11) | 30 | — | — | — | 40 | — |
| | EVA (Note 12) | — | 15 | 15 | — | — | 90 |
| | EVA (Note 13) | — | — | — | — | — | — |
| | EVA (Note 14) | — | — | — | — | — | — |
| | EVA (Note 15) | — | — | — | — | — | — |
| | EEA (Note 16) | — | — | — | — | — | — |
| | EAC (Note 17) | 10 | — | — | 50 | 50 | — |
| | EB (Note 7) | — | 20 | 20 | — | 10 | 10 |
| | EPDM (Note 18) | 60 | 50 | 50 | — | — | — |
| | PB (Note 19) | — | — | — | 20 | — | — |
| | PI (Note 20) | — | 10 | — | — | — | — |
| Organic peroxide | DCP | — | — | — | — | — | — |
| | MBPH | — | — | — | — | — | — |
| Sulfur type curing agent | Colloidal sulfur | — | — | 5 | 0.5 | — | — |
| | TMTDS | 1 | — | — | — | 2 | — |
| | MBT | — | 1 | — | — | — | — |
| Anti oxidant | MHQ | 2 | 2 | — | 2 | 2 | — |
| | PNA | — | — | 2 | — | — | — |
| | TBMP | — | — | — | — | — | — |
| | MBHPM | — | — | — | — | — | 2 |

TABLE 6-3

| | Example No. | | 103 | 104 | 105 | 106 | 107 |
|---|---|---|---|---|---|---|---|
| Polyolefin | PE | (Note 1) | — | — | — | — | — |
| | LPE | (Note 2) | — | — | — | — | — |
| | PE-M | | — | — | — | — | 5 |
| | PE | (Note 10) | 5 | — | — | — | — |
| | EVA | (Note 11) | — | 100 | — | 80 | — |
| | EVA | (Note 12) | 90 | — | — | — | 85 |
| | EVA | (Note 13) | — | — | 90 | — | — |
| | EVA | (Note 14) | — | — | — | — | — |
| | EVA | (Note 15) | 5 | — | — | — | — |
| | EEA | (Note 16) | — | — | — | 10 | — |
| | EAC | (Note 17) | — | — | — | — | — |
| | EB | (Note 7) | — | — | — | — | 10 |
| | EPDM | (Note 18) | — | — | 10 | 10 | — |
| | PB | (Note 19) | — | — | — | — | — |
| | PI | (Note 20) | — | — | — | — | — |
| Organic peroxide | DCP | | — | — | — | — | — |
| | MBPH | | — | — | — | — | — |
| Sulfur type curing agent | Colloidal sulfur | | 0.5 | 0.5 | 0.5 | 0.5 | 0.5 |
| | TMTDS | | — | — | — | — | — |
| | MBT | | — | — | — | — | — |
| Anti oxidant | MHQ | | — | 2 | 2 | — | — |
| | PNA | | — | — | — | — | — |
| | TBMP | | — | — | — | 0.5 | 0.5 |
| | MBHPM | | 2 | 0.5 | — | — | — |

TABLE 7-1

| | | Ref. Ex. 17 | Ex. 110 | Ex. 111 | Ex. 112 | Ex. 113 |
|---|---|---|---|---|---|---|
| Cured Polyolefin Composition (Weight part) | PE (Mitsubishi Petrochemical Co. Ltd., Yukalon ZF-30) | — | — | — | — | — |
| | PE (Mitsubishi Petrochemical Co. Ltd., Yukalon LK-30) | — | — | — | 100 | — |
| | PE (Mitsubishi Petrochemical Co. Ltd., Unipol , d 0.920) | — | — | — | — | — |
| | EPDM (Sumitomo Chemical Co. Ltd. Esprene 501) | — | — | — | — | 60 |
| | EPDM (Sumitomo Chèmical Co. Ltd. Mitsui EPT 1045) | — | 100 | 100 | — | — |
| | EVA (Showa Denko K.K., Sholex EVA CM22-1) | — | — | — | — | — |
| | EB (Mitsui Petrochemical Industries,Ltd., Tafmer) | — | — | — | — | 40 |
| | DCP | — | 10 | 4 | 20 | 10 |
| | BPPB | — | — | — | — | — |
| | MBPH | — | — | — | — | — |
| | AP | — | 2 | — | — | — |
| | AT | — | — | — | — | 4 |
| | EGM | — | — | — | 10 | — |
| | MPM | — | — | — | — | — |
| | TEGM | — | — | — | — | — |
| | TAIC | — | — | 2 | — | — |
| | AHT | — | — | — | — | — |
| | ZM | — | — | — | — | — |
| | MGA | — | — | — | — | — |
| | Toluene | — | 500 | 200 | — | 400 |
| | Xylene | — | — | — | 500 | — |
| | Cyclohexane | — | — | 300 | — | — |
| Peel strength (kg/cm) | Base composition A | 0 | 5.5 | 5.8 | 6.2 | 4.9 |
| | Base composition B | 0 | 4.9 | 5.3 | 4.9 | 4.5 |
| | Base compositiob C | 0 | 2.9 | 4.0 | 4.9 | 4.0 |

TABLE 7-2

| | | Ref. Ex. 114 | 115 | 116 | 117 | 118 |
|---|---|---|---|---|---|---|
| Cured Polyolefin Composition (Weight part) | PE (Mitsub-shi Petrochemical Co. Ltd., Yukalon ZF-30) | — | 100 | — | — | — |
| | PE (Mitsubishi Petrochemical Co. Ltd., Yukalon LK-30) | — | — | — | — | — |
| | PE (Mitsubishi Petrochemical Co. Ltd., Unipol , d 0.920) | — | — | 100 | — | — |
| | EPDM (Sumitomo Chemical Co. Ltd. Esprene 501) | — | — | — | — | 100 |
| | EPDM (Sumitomo Chemical Co. Ltd. Mitsui EPT 1045) | — | — | — | — | — |
| | EVA (Showa Denko K.K., Sholex EVA CM22-1) | 100 | — | — | 100 | — |
| | EB (Mitsui Petrochemical Industries, Ltd., Tafmer) | — | — | — | — | — |
| | DCP | — | — | — | 10 | 4 |
| | BPPB | 4 | — | — | — | — |
| | MBPH | — | 5 | 5 | — | 4 |
| | AP | — | — | — | — | — |
| | AT | — | — | — | — | — |
| | EGM | — | — | — | — | — |
| | MPM | 3 | — | — | — | — |
| | TEGM | — | 5 | 5 | — | — |
| | TAIC | — | — | — | — | — |
| | AHT | — | — | — | — | 2 |
| | ZM | — | — | — | — | 2 |
| | MGA | — | — | — | 4 | — |
| | Toluene | — | 500 | 500 | — | 500 |
| | Xylene | 200 | — | — | — | — |
| | Cyclohexane | 300 | — | — | 500 | — |
| Peel strength (Kg/cm) | Base composition A | 3.5 | 5.2 | 4.4 | 3.1 | 3.3 |
| | Base composition B | 3.3 | 4.5 | 4.0 | 3.1 | 3.0 |
| | Base composition C | 4.0 | 5.1 | 4.2 | 2.9 | 4.5 |

TABLE 8-1

| Example No. | | 119 | 120 | 121 | 122 |
|---|---|---|---|---|---|
| Pipe | Material | PE(d:0.945g/$cm^3$, MI:0.8g/10min.) 100 parts DCP 2.2 parts | do. | do. | do. |
| | Curing method | Chemical cure | do. | do. | do. |
| | Gel fraction (%) | 82 | do. | do. | do. |
| Joint | Material | PE(d,MI: Same as pipe) 100 parts VMS 2.0 parts DCP 0.2 parts BTR 0.05 parts | do. | do. | do. |
| | Curing method | Water cure | do. | do. | do. |
| | Gel fraction (%) | 73 | do. | do. | do. |
| Curable polyolefin composition | Base polymer | EB(d:0.88g/$cm^3$, MI:3.2g/10min., B: 10%) | EH(d:0.88g/$cm^3$, MI:0.5g/10min., H: 10%) | LPE(d:0.925g/$cm^3$, mp 119°C | LPE(d: 0.935g/$cm^3$, mp 123°C |
| | Organic peroxide | DCP 2.0 parts | DCP 20 parts | DCP 2.0 parts | BPPB 2.5 parts |
| | Sulfur type curing agent | — | — | — | — |
| | Anti oxidant | — | — | — | — |
| | Solvent | — | — | — | — |
| Water pressure (Kg/$cm^2$) after heat cycle | | ≧46 (Note 21) | do. | do. | do. |

TABLE 8-2

| Example No. | | 123 | 124 | 125 | 126 |
|---|---|---|---|---|---|
| Pipe | Material | Same as Ex. 119 | do. | do. | PE(d 0.935g/$cm^3$, MI:0.5g/10min.) 100 parts<br>VMS 2.0 parts<br>DCP 0.2 parts<br>BTR 0.05 parts |
| | Curing method | Chemical cure | do. | do. | Water cure |
| | Gel fraction (%) | 82 | do. | do. | 73 |
| Joint | Material | PE(d 0.945g/$cm^3$, MI:0.8g/10min.) 100 parts<br>DCP 1.5 parts | Same as Ex. 119 | do. | do. |
| | Curing method | Chemical cure | Water cure | do. | do. |
| | Gel fraction (%) | 67 | 73 | do. | do. |
| Curable polyolefin composition | Base polymer | PE-M | PE-A | EVA(d 0.93g/$cm^3$, MI:3.0g/10min. VA: 10%) | EEA(d 0.93g/$cm^3$, MI:0.8g/10min. EA: 8%) |
| | Organic peroxide | MBPH 2.5 parts | do. | DCP 2.0 parts | do. |
| | Sulfur type curing agent | — | — | — | — |
| | Anti oxidant | — | — | — | — |
| | Solvent | — | — | — | — |
| Water pressure (Kg/$cm^2$) after heat cycle | | $\geqq$ 46 (Note 21) | do | do. | do. |

TABLE 8-3

| Example No. | | 127 | 128 | 129 | 130 |
|---|---|---|---|---|---|
| Pipe | Material | Same as Ex. 126 | do. | do. | do. |
| | Curing method | Water cure | do. | do. | do. |
| | Gel fraction (%) | 73 | do. | do. | do. |
| Joint | Material | PE(d,MI: Same as pipe) 100 parts<br>VMS 2.0 parts<br>DCP 0.2 parts<br>BTR 0.05 parts | PP(d0.90g/cm$^3$, MI:2.0g/10min.) 100 parts<br>TAIC 6 parts<br>DCP 0.25 parts | PP(d0.91g/cm$^3$, MI:0.5g/10min.) 100 parts<br>MSPAF 3 parts<br>DCP 0.2 parts<br>BTR 0.05 parts | EPDM 100 parts<br>Zinc white 5 parts<br>Stearic acid 1 part<br>HAF Carbon 55 parts<br>Sulfur 1 part<br>MBT 0.5 parts<br>TMTMS 1.5 parts |
| | Curing method | Water cure | do. | do. | Chemical cure |
| | Gel fraction (%) | 73 | 75 | 72 | 78 |
| Curable polyolefin composition | Base polymer | PE (Note 1) 40 parts<br>EPDM (Note 8) 60 parts | EVA(d 0.93g/cm$^3$, MI:1.5g/10min., VA: 10%) 80 parts<br>EB(d 0.89g/cm$^3$, MI:4g/10min., B:5%) 20 parts | PE-M 50 parts<br>EEA(EA: 0.4 parts d 0.93g/cm$^3$, MI:1.5g/10min., 50 parts | EVA(d 0.93g/cm$^3$, MI:0.8g/10min., VA: 15%) |
| | Organic peroxide | DCP 20 parts | do. | do. | do. |
| | Sulfur type curing agent | Powdered sulfur 2 parts | Colloidal sulfur 5 parts | TMTDS 2 parts | MBT 5 parts |
| | Anti oxidant | — | — | — | MBI 2 parts |
| | Solvent | — | — | — | — |
| Water pressure (Kg/cm$^2$) after heat cycle | | ≧ 46 (Note 21) | do. | do. | do. |

TABLE 8-4

| Example No. | | 131 | 132 | 133 | 134 | 135 |
|---|---|---|---|---|---|---|
| Pipe | Material | PE(d 0.935g/$cm^3$, MI:0.5g/10min.) 100 parts<br>VMS 2.0 parts<br>DCP 0.2 parts<br>BTR 0.05 parts | do. | do. | do. | do. |
| | Curing method | Water cure | do. | do. | do. | do. |
| | Gel fraction (%) | 73 | do. | do. | do. | do. |
| Joint | Material | PECℓ(specific gravity: 1.15, MI:0.4g/min. Cℓ:32%) 100 parts<br>Antimony trioxide 10 parts<br>Tribasic lead sulfate 1.5 parts<br>DCP 3.5 parts | EVA(VA:10%, d 0.93g/$cm^3$, MI:3g/10min.) 100 parts<br>DCP 2.0 parts | do. | do. | do. |
| | Curing method | Chemical cure | do. | do. | do. | do. |
| | Gel fraction (%) | 81 | 88 | do. | do. | do. |
| Curable polyolefin composition | Base polymer | EVA(d 0.93g/$cm^3$, MI:0.8g/10min. VA:15%) | EVA(VA:19% MI;150g/10min.) | Note 22 | Note 23 | Note 24 |
| | Organic peroxide | DCP 20 parts | do. | do. | do. | do. |
| | Sulfur type curing agent | MTCZ 2 parts | NHBTSA 2 parts | — | — | — |
| | Anti oxidant | NNP 1.0 part | BMP 2 parts | MHQ 2 parts | TMBP 2 parts | MBHPM 2 parts |
| | Solvent | — | — | — | — | — |
| Water pressure (Kg/$cm^2$) after heat cycle | | ≧ 46 (Note 21) | do. | do. | do. | do. |

TABLE 8-5

| | | 136 | 137 | 138 | 139 |
|---|---|---|---|---|---|
| Example No. | | 136 | 137 | 138 | 139 |
| Pipe | Material | PE(d 0.935g/cm$^3$, MI:0.5g/10min.) 100 parts<br>VMS 2.0 parts<br>DCP 0.2 parts<br>BTR 0.05 parts | do. | do. | do. |
| | Curing method | Water cure | do. | do. | Uncured |
| | Gel fraction (%) | 73 | do. | do. | (73) Note 27 |
| Joint | Material | LPE (d 0.935g/cm$^3$, mp 123°C, MI: 0.8g/10min.) 100 parts<br>VMS 2.0 parts<br>DCP 0.2 parts<br>BTR 0.05 parts | PE(d,MI: Same as pipe) 100 parts<br>VMS 20 parts<br>DCP 0.2 parts<br>BTR 0.05 parts | do. | do. |
| | Curing method | Water cure | do. | do. | Uncured |
| | Gel fraction (%) | 76 | do. | do. | 73 Note 27 |
| Curable polyolefin composition | Base polymer | LPE (Note 2) | Note 25 | Note 26 | EEA (d 0.93g/cm$^3$, MI:0.8g/10min. EA: 8%) |
| | Organic peroxide | DCP 2.0 parts | DCP 2.5 parts | do. | — |
| | Sulfur type curing agent | Colloidal sulfur 5 parts | MBT 2 parts | TETDS 1 part | — |
| | Anti oxidant | — | MHQ 0.5 parts | PNA 0.5 parts | — |
| | Solvent | Xylene | Decahydro-naphthalene 1000 parts | Xylene 1000 parts | do. |
| Water pressure (Kg/cm$^2$) after heat cycle | | ≥47 (Note 21) | do. | do. | do. |

Table 9

| | |
|---|---|
| AHT | Triacryloylhexahydro-1,3,5-triazine |
| AP | Diallyphthalate |
| AT | Triallyltrimellitate |
| BBMP | 4,4'-Thiobis-(3-t-butyl-6-methyl)phenol |
| B | Butene-1 |
| BMP | Dibutyl-4-methyl phenol |
| BPMH | 1,1-Di(t-butylperoxy-3,3,5-trimethyl)cyclohexane |
| BPPB | 1,3-bis(t-butylperoxy-isopropy)benzene |
| BTR | Dibutyl-tin-di-laulate |
| DCP | Dicumyl peroxide |
| EA | Ethyl acrylate |
| EAC | Ethylene-acrylic acid copolymer |
| EB | Ethylene-butene-1 copolymer |
| EBM | Ethylene-butene-1-maleic acid terpolymer (butene-1: 5%, maleic acid: 1.2%) |
| EEA | Ethylene-ethyl acrylate copolymer |
| EGM | Ethyleneglycol dimethacrylate |
| EH | Ethylene-hexen-1 copolymer |
| EHN | Ethylene-hexene-1-ethylidene norbonene terpolymer (hexene-1: 10%, ethylidene norbonene: 1%) |
| EM | Ethylene-maleic acid copolymer (maleic acid: 1%, d:0.92, MI:3.5) |
| EPDM | Ethylene-propylene-dieneterpolymer |
| EVA | Ethylene-vinyl acetate copolymer |
| H | Hexen-1 |

| | |
|---|---|
| LPE | Linear polyethylene |
| MBHPM | Tetrakis-[methylene-3-(3',5'-di-t-butyl-4'-hydroxy phenol) propionate]methane |
| MBI | 2-Mercaptobenzimidazole |
| MBPH | 2,5-Dimethyl-2,5-di-(t-butylperoxy)-hexine-3 |
| MBT | 2-Mercaptobenzothiazole |
| MGA | Magnesium acrylate |
| MHQ | Poly-(2,2,4-trimethyl-1,2-dihydroquinolline) |
| MPM | Trimethylolpropane-trimethacrylate |
| MSPAF | 3-Trimethoxysilylpropyl azidoformate |
| MTCZ | Zinc dimethyldithiocarbamate |
| NHBTSA | N-Cyclohexyl-2-benzothazolylsulfenamide |
| NNP | N,N'-dinaphthylparamine |
| PB | Polybutadiene |
| PE | Polyethylene |
| PE-A | Acrylic acid grafted polyethylene (acrylic acid: 0.4%, d:0.91, MI:13) |
| PE-M | Maleic acid grafted polyethylene (maleic acid: 0.2%, d:0.93, MI:4) |
| PECℓ | Chlorinated polyethylene |
| PI | Polyisoprene |
| PP-MA | Maleic and acrylic acid grafted polypropylene (maleic acid: 0.2%, acrylic acid: 0.2%, d:0.88, MI:8.0) |
| PNA | Phenyl-1-naphthylamine |
| PP | Polypropylene |

| | |
|---|---|
| TAIC | Triallylisocyanurate |
| TBMP | 2,6-t-butylmethylphenol |
| TETDS | Tetraethylenethiuram disulfide |
| TEGM | Triethyleneglycoldimethacrylate |
| TMBP | 4,4'-Thiobis(3-methyl-6-butylphenol) |
| TMTDS | Tetramethylthiuram disulfide |
| TMTMS | Tetramethylthiuram monosulfide |
| VA | Vinyl acetate |
| VMS | Vinyl trimethoxysilane |
| XEP-1 | Cured EPDM composition: |

| | |
|---|---|
| EPDM(d:0.87, Moony viscosity/$ML_{1+4}$, 100°C):20, Third component:dicyclopentadiene | 100 parts |
| ZnO | 5 parts |
| Stearic acid | 1 part |
| HAF carbon | 55 parts |
| Naphthene oil | 10 parts |
| Sulfur | 1 part |
| MBT | 0.5 parts |
| TMTMS | 1.5 parts |

XEVA-1 Cured EVA composition:

| | |
|---|---|
| EVA (VA: 10%, d:0.93, MI:3) | 100 parts |
| DCP | 2 parts |

XEVA-2 Cured EVA composition:

| | |
|---|---|
| EVA (VA: 15%, d:0.93, MI:3 ) | 100 parts |
| DCP | 2.2 parts |

| | | |
|---|---|---|
| XPE-1 | PE (d:0.92, MI: 1.1) cured with DCP | |
| XPE-2 | Water cured PE composition: | |
| | PE(d:0.955, MI:o.5) | 100 parts |
| | VMS | 2 parts |
| | DCP | 0.2 parts |
| | BTR | 0.05 parts |
| XPE-3 | Water cured PE composition: | |
| | PE(d:0.950, MI:0.45) | 100 parts |
| | VMS | 2.0 parts |
| | DCP | 0.2 parts |
| | BTR | 0.05 parts |
| XPECℓ -1 | Cured flame-resisting PECℓ composition: | |
| | PECℓ (Cℓ: 32%, d:1.15, MI:0.4) | 100 parts |
| | $Sb_2O_3$ | 10 parts |
| | Tribasic lead sulfide | 1.5 parts |
| | DCP | 3.5 parts |
| XPP-1 | Cured PP composition: | |
| | PP(d:0.90, MI:2.0) | 100 parts |
| | TAIC | 6 parts |
| | DCP | 0.25 parts |
| XPP-2 | Water cured PP composition: | |
| | PP(d:0.91, MI:0.5) | 100 parts |
| | MSPAF | 3 parts |
| | DCP | 0.2 parts |
| | BTR | 0.05 parts |

| | | | |
|---|---|---|---|
| XPP-3 | Water cured PP composition: | | |
| | | PP(d:0.91, MI:0.8) | 100 parts |
| | | MSPAF | 3.0 parts |
| | | DCP | 0.2 parts |
| | | BTR | 0.05 parts |
| XPP-4 | Water cured PP composition: | | |
| | | PP(d:0.91, MI: 0.9) | 100 parts |
| | | MSPAF | 3.0 parts |
| | | DCP | 0.2 parts |
| | | BTR | 0.05 parts |
| ZM | Zinc methacrylate | | |

(Note 1) d : 0.920, MI : 2.0

(Note 2) d : 0.922, MI : 2.5, mp : 124°C

(Note 3) d : 0.955, MI : 1.8, mp : 124°C

(Note 4) d : 0.955, MI : 0.2

(Note 5) VA : 10%, MI : 1.5, d : 0.93

(Note 6) d : 0.89, MI : 4

(Note 7) EA : 15%, d : 0.93, MI : 1.5

(Note 8) Iodine value : 12, Mooney viscosity : 40 ($ML_{1+4}$, 100°C)

(Note 9) VA : 19%, MI : 150, d : 0.94

(Note 10) d : 0.920, Average molecular weight 1500, mp : 89°C

(Note 11) VA : 25%, MI : 400

(Note 12) VA : 19%, MI : 800

(Note 13) VA : 19%, MI : 150

(Note 14) VA : 10%, MI : 70

(Note 15) VA : 15%, MI : 1.5

(Note 16) EA : 5%, d : 0.93g/$cm^3$, MI : 1.5

(Note 17) Acrylic acid : 20%, MI : 300, d : 0.95

(Note 18) Iodine value : 31, Ethylene/Propylene : 57/43, Average molecular weight : 16500

(Note 19) Average molecular weight : 2000

(Note 20) Average molecular weight : 47000, Viscosity (38°C) : 4800 poise

(Note 21) Breaked portion : Pipe

(Note 22) PE (d : 0.92g/$cm^3$, MI : 20g/10min.) 15 parts

LPE (d : 0.922g/$cm^3$, MI : 2.5g/10min.

mp : 124°C) 5 parts

EVA (VA : 9%, MI : 150g/10min.) 85 parts

(Note 23) EVA (VA : 25%, MI : 400g/10min.) 30 parts

EAC (Acrylic acid : 20%, MI : 300g/10min.) 10 parts

(Note 24) PE-M 10 parts

PE (d : 0.92g/$cm^3$, Average molecular weight : 1500, mp : 89°C) 50 parts

EB (d: 0.89/$cm^3$, MI:4g/10 min.) 20 parts

PB (Average molecular weight: 2000) 20 parts

(Note 25) PE-M 50 parts

EVA (VA: 19%, MI: 150g/10min., d: 0.94g/$cm^3$) 50 parts

(Note 26) EB (d: 0.89g/$cm^3$, MI: 4g/10min.) 50 parts

EPDM (Iodine value: 12, Mooney viscosity: 40 ($ML_{1+4}$, 100°C) 50 parts

(Note 27) Cured after adhesion

Claims:

1. In adhering two polyolefin articles one or both of which at least have a surface layer of cured polyolefin, a method of adhering the polyolefin articles to each other characterized in that a curable polyolefin composition containing an organic peroxide is interposed between the surfaces of the articles to be adhered and is heat-cured.

2. A method as defined in claim 1 wherein the curable polyolefin composition comprises as its base a copolymer of ethylene and at least one α-olefin having 3 to 10 carbon atoms, the copolymer containing 0.5 to 50% by weight of the α-olefin.

3. A method as defined in claim 2 wherein the copolymer comprises as its third component at least one of nonconjugated dienes, ethylenically unsaturated carboxylic acids and acid anhydrides thereof.

4. A method as defined in claim 1 wherein the curable polyolefin composition comprises as its base a polyolefin modified with an ethylenically unsaturated carboxylic acid or an acid anhydride thereof, the modified polyolefin containing 0.001 to 10% by weight of the ethylenically unsaturated carboxylic acid.

5. A method as defined in claim 4 wherein the ethylenically unsaturated carboxylic acids and the acid anhydrides thereof are acrylic acid, maleic acid, itaconic acid, himic acid and acid anhydrides thereof.

6. A method as defined in claim 1 wherein the

curable polyolefin composition comprises as its base a copolymer of an α-olefin and a carboxylic acid or an acid anhydride thereof, the copolymer having a melt index MI given by:

$$MI = n \times MIo$$

wherein MI is a melt index (g/10 min) as measured by the method of JIS K 6760, MIo is the melt index of the polyolefin forming the articles as measured by the same method before curing, and n is 0.2 to 5.

7. A method as defined in claim 1 wherein the curable polyolefin composition comprises as its base a polyethylene having a melting peak (mp, °C) as determined by differential thermal analysis and a density (d, g/cm$^3$) which satisfy the following conditions (1) and (2):

$$mp \geq 500d - 345 \quad (1)$$

$$0.915 \leq d \leq 0.970 \quad (2)$$

8. A method as defined in any one of claims 1 to 7 wherein the curable polyolefin composition comprises as its base a polyolefin which is in the form of a liquid to a solid having a melt index MI of at least 100.

9. A method as defined in any one of claims 1 to 8 wherein the curable polyolefin composition contains a sulfur-type curing agent.

10. A method as defined in any one of claims 1 to 9 wherein the curable polyolefin composition contains an antioxidant.

11. A method as defined in any one of claims 1 to 10 wherein the curable polyolefin composition contains a solvent having affinity for the polyolefin.

12. A method as defined in any one of claims 1 to 11 wherein the polyolefin articles are pipes.

13. A method as defined in any one of claims 1 to 12 wherein the polyolefin articles are a pipe joint and a pipe to be inserted into and bonded to the joint.

# INTERNATIONAL SEARCH REPORT

**0086842**

International Application No. PCT/JP82/00330

**I. CLASSIFICATION OF SUBJECT MATTER** (if several classification symbols apply, indicate all) [3]

According to International Patent Classification (IPC) or to both National Classification and IPC

Int. Cl.[3] C08J 5/12

**II. FIELDS SEARCHED**

Minimum Documentation Searched [4]

| Classification System | Classification Symbols |
|---|---|
| I P C | C08J 5/12, B29C 27/00 |

Documentation Searched other than Minimum Documentation to the Extent that such Documents are Included in the Fields Searched [5]

| | |
|---|---|
| Jitsuyo Shinan Koho | 1951 - 1981 |
| Kokai Jitsuyo Shinan Koho | 1971 - 1981 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| X | JP,B1, 38-18979 (Sumitomo Electric Industries Ltd.) 20. September. 1963 (20. 9. 63) | 1.8.10.11 |
| X | JP,B1, 46-18866 (The Furukawa Electric Co., Ltd.) 26. May. 1971 (26. 5. 71) | 1.8.10.11. 12.13 |
| Y | JP,B1, 39-8081 (Toyo Rayon Co., Ltd.) 21. May. 1964 (21. 5. 64) | 2.9 |
| Y | JP,B1, 50-18490 (Cemedine Co., Ltd.) 30. June. 1975 (30. 6. 75) | 2.3 |
| Y | JP,B2, 51-21419 (Showa Denko Kabushiki Kaisha) 2. July. 1976 (2. 7. 76) | 6 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| November 12, 1982 (12.11.82) | November 22, 1982 (22.11.82) |
| International Searching Authority [1] | Signature of Authorized Officer [20] |
| Japanese Patent Office | |